# EUROPÄISCHE PATENTSCHRIFT

(11) **EP 1 958 074 B1**
(45) Veröffentlichungstag und Bekanntmachung des Hinweises auf die Patenterteilung: **29.06.2011**
(21) Anmeldenummer: 06806253.8
(22) Anmeldetag: 13.10.2006
(51) Int. Cl.: G06F 13/38, H04L 29/12

(54) **ZUORDNUNG VON STATIONSADRESSEN ZU KOMMUNIKATIONSTEILNEHMERN IN EINEM BUSSYSTEM**
ALLOCATION OF STATION ADDRESSES TO COMMUNICATION SUBSCRIBERS IN A BUS SYSTEM
AFFECTATION D'ADRESSES DE STATION A DES ABONNES DE COMMUNICATION DANS UN SYSTEME DE BUS

(30) Priorität: 24.11.2005 DE 102005056294
(43) Veröffentlichungstag der Anmeldung: 20.08.2008
(73) Patentinhaber: SEW-EURODRIVE GmbH & Co. KG, 76646 Bruchsal (DE)
(72) Erfinder: SIMON, Olaf, 76646 Bruchsal (DE)
(86) Internationale Anmeldenummer: PCT/EP2006/009901
(87) Internationale Veröffentlichungsnummer: WO 2007/059823

(56) Entgegenhaltungen:
- EP-A1- 0 537 814
- EP-A2- 0 182 417
- EP-A2- 0 495 397
- EP-A2- 0 854 609
- EP-A2- 0 855 817
- WO-A1-03/085899
- WO-A2-02/15452
- WO-A2-2005/062140
- DE-A1- 4 428 502
- DE-A1- 10 147 512
- DE-A1- 10 256 631
- DE-A1- 19 621 272
- DE-A1- 19 647 668
- US-A1- 2003 101 282

## Beschreibung

Die Erfindung betrifft ein Verfahren zum Zuordnen von Adressen an Busteilnehmer eines Bussystems und Anlage.

Es ist bekannt Busteilnehmern bei der Produktion oder Inbetriebnahme mittels DIP Schaltern eine feste Adresse zuzuordnen. Somit ist bei Inbetriebnahme einer Anlage mit solchen Busteilnehmern jedem eine Adresse zugeordnet. Unter Anlagen werden auch Maschinen verstanden.

Alternativ wird einem Busteilnehmer, wie Antrieb oder dergleichen, eine Adresse zugeordnet, wenn ein Rechner zum Parametrieren verbunden wird und mit diesem die Adresse eingespielt wird.

Als Busteilnehmer wird in der vorliegenden Schrift das jeweilige ganze Gerät bezeichnet, also nicht nur die busfähige Elektronik sondern beispielsweise der gesamte zugehörige Antrieb, umfassend Getriebe und Motor. Ein anderes Beispiel ist eine dezentrale Steuerung.

Aus der EP 0 495 397 A2 sind Busteilnehmer bekannt, die jeweils Anzeigemittel aufweisen, mit welchen die erfolgreiche oder nicht erfolgreiche Adressvergabe durch ein Mastergerät angezeigt wird.

Aus der WO 02/15452 A2 ist bekannt, eine voreingestellte Adresse an Busteilnehmer zu vergeben.

Der Erfindung liegt daher die Aufgabe zugrunde, eine einfachere Zuordnung von Adressen weiterzubilden.

Erfindungsgemäß wird die Aufgabe bei dem Verfahren nach den in Anspruch 1 angegebenen Merkmalen gelöst.

Von Vorteil ist dabei, dass die Inbetriebnahme viel schneller ausführbar ist, da nun keine Verbindung zu einem Inbetriebnahme-Mittel herzustellen ist, insbesondere keine nacheinander an jedem Antrieb durchzuführende Punkt zu Punkt Verbindung, sondern nur eine einfache Aktion auszuführen ist. Der Bediener kann sich beispielweise durch die Anlage bewegen und die Antriebe nacheinander durch verschiedene Aktionsauslösungen identifizieren. Somit ist ein Nacheinander-Aktivieren ausführbar und die Adresse des jeweiligen Antriebs zuordenbar.

Bei einer vorteilhaften Ausgestaltung wird die Aktion von einem Menschen ausgeführt. Von Vorteil ist dabei, dass der Bediener eine bloße Handbewegung ausführen oder ein spezielles Wort sprechen muss. Der Busteilnehmer ist entsprechend ausgeführt, so dass diese Aktion erkennbar ist, beispielsweise mit einem Drehwinkelsensor oder einem Spracherkennungssystem.

Bei einer vorteilhaften Ausgestaltung wird bei der Fertigung zumindest eines vorkomplettierten Anlagenteils oder der gesamten Anlage die Adressen automatisiert vergeben. Von Vorteil ist dabei, dass ein Anlagenteil vor-fertigbar ist und schon dabei die Adressen vergebbar sind. Die Aktion ist dabei von der Fertigungsmaschine oder Fertigungsanlage zum Fertigen des Anlagenteils ausführbar.

Insbesondere sind die Busteilnehmer derart ausführbar, dass bei Zuschalten der Versorgungsspannung an die Anlage die Busteilnehmer mit einer individuellen Zeitverzögerung voll zugeschaltet sind, so dass davon abhängig die Adressen dann vergeben werden. Die Zeitverzögerung ist beispielsweise durch elektronische Bauelemente realisierbar. Auf diese Weise sind die Adressen sogar bei jedem erneuten Aus- und Anschalten der Anlage neu vergebbar.

Als Versorgungsspannung ist nicht nur die Energieversorgung sondern auch die Weiterschaltung der 24 Volt Niederspannungsversorgung oder von Signalen von einem bereits adressierten Umrichter zum Folgeumrichter in einer seriellen Verkabelung dieser für die Steuerung verwendeten Versorgungsspannung oder Signals.

Bei einer vorteilhaften Ausgestaltung ist die Aktion ein Bewegen eines mechanisch bewegbar angeordneten Teils des Bustellnehmers, wie Welle, Abtriebswelle, Motorwelle, Zwischenwelle, Rotor oder dergleichen. Von Vorteil ist dabei, dass sowieso vorhandene Sensoren oder Komponenten zum Detektieren der Aktion verwendbar sind.

Bei einer vorteilhaften Ausgestaltung ist die Aktion ein Zuschalten der elektrischen Energieversorgung für den Busteilnehmer (sei es Steuerversorgung und/oder Energieversorgung). Von Vorteil ist dabei, dass eine besonders einfache und sowieso nötige Aktion verwendet wird. Somit ist eine besonders schnelle Inbetriebnahme ermöglicht.

Bei einer vorteilhaften Ausgestaltung ist die Aktion ein Freigeben einer Reglersperre, insbesondere ein Klemmen einer Drahtbrücke, am Busteilnehmer. Von Vorteil ist dabei, dass eine sowieso aus Sicherheitsgründen auszuführende Aktion verwendbar ist.

Bei einer vorteilhaften Ausgestaltung ist die Aktion beispielsweise das Betätigen eines digitalen Eingangs, also Anlegen einer Spannung, oder Drücken eines Schalters oder Knopfes. Von Vorteil ist dabei, dass besonders einfach und schnell auszuführende Aktionen auswählbar sind.

Bei einer vorteilhaften Ausgestaltung ist die Aktion das Betätigen eines Betätigungsmittels, wie Potentiometer, Drehknopf oder dergleichen. Von Vorteil ist dabei, dass besonders einfache Drehbewegungen mit der Hand ausführbar sind und als Aktion verwendbar sind.

Bei einer vorteilhaften Ausgestaltung ist die Aktion das Betätigen einer Funk- oder Infrarotschnittstelle. Von Vorteil ist dabei, dass ein berührungsloses Ausführen der Aktion verwendbar ist.

Bei einer vorteilhaften Ausgestaltung wird für jeden Busteilnehmer eine Sorte von Aktion von mehreren Sorten von Aktionen verwendet als Aktion. Von Vorteil ist dabei, dass mehrere Sorten von Aktionen, beispielsweise ein Drehen des Potentiometers oder eine Infrarotpulsfolge, verwendbar sind

Bei einer vorteilhaften Ausgestaltung werden für jeden Busteilnehmer dieselbe Sorte von Aktion verwendet. Von Vorteil ist dabei, dass keine unzulässige Aktion eine Adressänderung auslösen kann.

Bei einer vorteilhaften Ausgestaltung werden verschiedene Busteilnehmer verschiedene Sorten von Aktion verwendet. Von Vorteil ist dabei, dass je nach Typ des Busteilnehmers eine entsprechende Aktion verwendbar ist. Bei einem Antrieb als Busteilnehmer ist beispielsweise eine Welle drehbar und bei einer Steuerung als Busteilnehmer beispielsweise ein Eingang betätigbar. Denn eine solche Steuerung kann je nach Ausführung beispielsweise keine Welle aufweisen.

Bei einer vorteilhaften Ausgestaltung wird beim Schritt (i) ein Broadcast-Telegramm verwendet. Von Vorteil ist dabei, dass sowieso schon vorhandene Befehlsorten verwendbar sind.

Bei einem Broadcast-Telegramm handelt es sich um eine Telegramm-Information, die an mehrere Teilnehmer versendet wird. Eine Antwort erfolgt erst nach der ausgeführten Aktion, ist also nicht unmittelbar durch das Broadcast-Telegramm initiiert. Dabei antwortet aber nur derjenige Busteilnehmer, welcher die Information gesendet hat.

Bei einer vorteilhaften Ausgestaltung ist die übernommene Adresse als Adresse des Busteilnehmers im Bussystem wirksam. Von Vorteil ist dabei, dass die Auslieforadresse überschreibbar und deaktivierbar ist.

Wichtige Merkmale bei der Anlage sind, dass sie ein Bussystem mit Busteilnehmern umfasst, wobei die Busteilnehmer bei der Herstellung oder Inbetriebnahme der Anlage mit Adressen gemäß einem vorbeschriebenen Verfahren ausstattbar sind. Eine vorgeschriebene Zuordnung ist dabei vorteilig.

Von Vorteil ist dabei, dass die Adressen nicht flüchtig abspeicherbar sind und somit die Busteilnehmer nach der Herstellung oder Inbetriebnahme an diese Adresse gerichtete Informationen empfangen können. Insbesondere sind DIP Schalter zum Einstellen der Adresse einsparbar.

Bei einer vorteilhaften Ausgestaltung sind am Busteilnehmer Mittel zum Ausführen mindestens einer Aktion vorgesehen. Von Vorteil ist dabei, dass ein Betätigungsmittel oder ein Sensor zum Feststellen einer Aktion vorgesehen ist. Insbesondere ist ein Sensor verwendet, der sowieso vorhanden ist.

Weiterhin von Vorteil ist bei der Erfindung, dass vom Anlagenbetreiber getauschte Antriebe identifiziert werden können, und falls es sich um einen im Busverbund einzeln getauschten Antrieb handelt, dieser automatisch auf seine gültige Adresse gesetzt werden kann.

Weitere Vorteile ergeben sich aus den Unteransprüchen.

### Bezugszeichenliste

- 1: zentraler Rechner
- 2, 3, 4: Busteilnehmer
- 5: Datenbus
- 6: Energieversorgung

Die Erfindung wird nun anhand von Abbildungen näher erläutert:

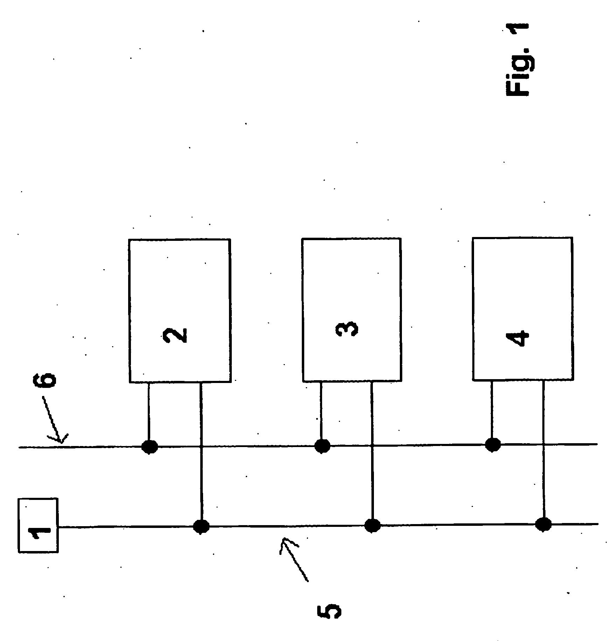

In der Figur 1 ist eine erfindungsgemäße Vorrichtung angedeutet. Dabei handelt es sich um eine Anlage, bei der verschiedene Geräte, beispielsweise Antriebe oder dezentrale Elektronikbaugruppen, wie dezentrale Steuerungen, als Busteilnehmer (2,3,4) vorgesehen sind. Der Datenaustausch zwischen den Busteilnehmern (2,3,4) und einem zentralen Rechner 1 findet über den Datenbus 5 statt.

Die Busteilnehmer (2,3,4) sind außerdem an eine Energieversorgung 6 angeschlossen.

Die Busteilnehmer sind mit einer individuellen Adresse auszustatten, um eine Identifizierung zu ermöglichen. Somit sind Daten verschickbar an bestimmbare Empfänger.

Das erfindungsgemäße Verfahren zur Adressierung, also einer Zuordnung von Adressen an die Busteilnehmer, erfolgt dadurch, dass bei Herstellung des Busteilnehmers seine Adresse auf eine Auslieferadresse fest gelegt wird.

Bei Inbetriebnahme der Anlage wird nun jedem Busteilnehmer eine Adresse zugeordnet. Dies erfolgt dadurch, dass der zentrale Rechner an die Auslieferadresse die Information schickt, dass der Empfänger dieser Botschaft seine Adresse auf den mitversendeten Wert festlegen soll. Dies kann als sogenanntes Broadcast-Telegramm versendet werden, also in Form einer für alle verbundenen Busteilnehmer bestimmten Botschaft.

Der jeweilige Busteilnehmer führt diesen Befehl jedoch erst aus, wenn eine zusätzliche vorher bestimmbare Aktion erfolgt. Nach Ausführen des Befehls meldet der Busteilnehmer - selbsttätig oder auf Nachfrage der übergeordneten Steuerung - die Vollendung der Ausführung an den zentralen Rechner zurück. Dieser wiederholt dann das Aussenden einer Botschaft mit einer anderen Adresse. Der nächste Busteilnehmer führt diesen Befehl jedoch wieder erst aus, wenn wiederum eine zusätzliche vorher bestimmbare Aktion erfolgt. Die Art der Aktion ist für alle Busteilnehmer gleich.

In verschiedenen Ausführungsbeispielen sind verschieden Aktionen realisiert:
1) Als eine erste beispielhafte Aktion ist die Einschaltung der Energieversorgung vorgesehen. Dadurch, dass bei der Inbetriebnahme dafür gesorgt wird, dass ein Busteilnehmer nach dem anderen diese Aktion erhält, wird eine individuelle Adresse sichergestellt.
2) Eine alternative Aktion ist das Bewegen eines Teils des Antriebs, wie Welle oder dergleichen.
3) Eine andere alternative Aktion ist das Freigeben einer Reglersperre. Dies ist beispielsweise durch das Klemmen einer Drahtbrücke am Busteilnehmer ausführbar
4) Eine andere alternative Aktion ist beispielsweise durch das Betätigen eines digitalen Eingangs, also Anlegen einer Spannung oder Drücken eines Schalters oder Knopfes realisierbar.
5) Eine weitere alternative Aktion ist beispielsweise durch das Betätigen eines Betätigungsmittels, wie Potentiometer, Drehknopf oder dergleichen, ausführbar.
6) Eine weitere alternative Aktion ist beispielsweise durch das Betätigen einer Funk- oder Infrarotschnittstelle ausführbar, indem beispielsweise ein entsprechendes Signal gesendet wird.

In weiteren erfindungsgemäßen Ausführungsbeispielen ist kein zentraler Rechner vorhanden sondern die Funktion wird von einem Busteilnehmer oder einem beispielhaft vorübergehend, an den Datenbus angeschlossenen Rechner ausgeführt.

In weiteren erfindungsgemäßen Ausführungsbeispielen ist die Energieversorgung und die Datenübertragung in einem Kabelsystem integriert ausgeführt. Dies ist einerseits möglich über ein Hybridkabelsystem, das Starkstrom- und Busleitungen umfasst, oder durch höherfrequente Aufmodulation der Businformation auf dem Energieversorgungskabel.

In weiteren erfindungsgemäßen Ausführungsbeispielen sind die Busteilnehmer berührungslos versorgt von dem Energieversorgungssystem. Dabei ist in der Anlage ein Primärleiter zu verlegen und die Busteilnehmer sind mit Sekundärspulen ausgestattet, welche induktiv ankoppelbar sind an den Primärleiter, um die Energieversorgung für den Busteilnehmer einzuschalten. Beispielsweise wird der Primärleiter hierzu um einen Gehäusebereich des Busteilnehmers herumgewickeit.

Busteilnehmer können Antriebe sein. Es sind auch Umrichter, Umrichtermotoren, dezentrale Steuerungen oder dezentrale Elektronikgeräte oder dergleichen als Bustelinehmer einsetzbar.

In weiteren erfindungsgemäßen Ausführungsbeispielen ist jedem Busteilnehmer eine verschiedene Art von Aktion zugeordnet. Es ist aber auch eine Menge von Aktionen zuordenbar, so dass beim Auftreten einer der Aktionen an einem Busteilnehmer der Busteilnehmer den Befehl ausführt und die Rückmeldung an den zentralen Rechner abschickt.

## Patentansprüche

1. Verfahren zum Zuordnen von Adressen an Busteilnehmer eines Bussystems,
wobei die Busteilnehmer Antriebe sind,
wobei Busteilnehmer mit einer gleichen Auslieferadresse ausgestattet sind,
wobei
(i) eine Zuordnungsinstanz, die als zentraler Rechner oder Inbetriebnahme-Rechner ausgebildet ist, über das Bussystem eine Information an die Auslieferadresse versendet;
(ii) die Information eine erste Adresse umfasst
(iii) eine Aktion zur Identifizierung an einem ersten Busteilnehmer ausgeführt wird, deren Wirkung von dem ersten Busteilnehmerdetektiert wird,
(iv) der erste Busteilnehmer die erste Adresse übernimmt,
(v) der erste Busteilnehmer eine Rückmeldung an die Zuordnungsinstanz versendet,
(vi) die Schritte (i) bis (v) mit jeweils einer weiteren Adresse für jeweils einen weiteren Busteilnehmer wiederholt werden,
wobei beim Schritt (i) ein Broadcast-Telegramm verwendet wird;
wobei die Aktion ein Bewegen eines mechanisch bewegbar angeordneten Teils des jeweiligen Busteilnehmers, wie Antriebswelle, Motorwelle, Zwischenwelle oder Rotor ist.

2. Verfahren nach mindestens einem der vorangegangenen Ansprüche,
**dadurch gekennzeichnet, dass**
die Aktion von einem Menschen ausgeführt werden.

3. Verfahren nach mindestens einem der vorangegangenen Ansprüche,
**dadurch gekennzeichnet, dass**
bei der Fertigung zumindest eines vorkomplettierten Anlagenteils
die Adressen automatisiert vergeben werden,

4. Verfahren nach mindestens einem der vorangegangenen Ansprüche,
**dadurch gekennzeichnet, dass**
die Busteilnehmer derart angeordnet sind, dass die Energieversorgung oder Signalelektronik-Versorgungsspannung seriell zuschaltbar ist, insbesondere indem der Busteilnehmer seinem nachfolgenden Busteitnehmer zumindest eine der Versorgungsspannungen oder Signale zuschaltet und/oder frei gibt.

5. Verfahren nach mindestens einem der vorangegangenen Ansprüche,
**dadurch gekennzeichnet, dass**
für jeden Busteilnehmer eine Sorte von Aktion von mehreren Sorten von Aktionen verwendet wird als Aktion.

6. Verfahren nach mindestens einem der vorangegangenen Ansprüche,
**dadurch gekennzeichnet, dass**
für jeden Busteihehmer dieselbe Sorte von Aktion verwendet werden
oder
verschiedene Busteilnehmer verschiedene Sorten von Aktion verwendet werden.

7. Verfahren nach mindestens einem der vorangegangenen Ansprüche,
**dadurch gekennzeichnet, dass**
die übernommene Adresse als Adresse des Busteilnehmers im Bussystem wirksam ist.

8. Anlage, umfassend Bussystem mit Busteilnehmern,
**dadurch gekennzeichnet, dass**
die Busteilnehmer bei der Herstellung oder Inbetriebnahme der Anlage mit Adressen gemäß einem Verfahren nach mindestens einem der vorangegangenen Ansprüche ausstattbar sind

## Claims

1. Method for assigning addresses to bus nodes of a bus system,
the bus nodes being drives,
bus nodes being furnished with an identical delivery address,
where
(i) an assigning entity in the form of a central computer or a start-up computer sends information to the delivery address via the bus system,
(ii) the information includes a first address,
(iii) an action for identification is performed at a first bus node, the effect of which action is detected by the first bus node,
(iv) the first bus node accepts the first address,
(v) the first bus node sends a response to the assigning entity,
(vi) steps (i) to (v) are repeated, each time with a further address for each further bus node,
a broadcast message being used in step (i),
the action being a movement of a part of the respective bus node disposed in a manner allowing mechanical movement, such as a drive shaft, a motor shaft, an intermediate shaft, or a rotor.

2. Method according to at least one of the preceding claims,
**characterised in that**
the action is performed by a person.

3. Method according to at least one of the preceding claims,
**characterised in that**
the addresses are assigned in automated fashion during production of at least one pre-completed installation part.

4. Method according to at least one of the preceding claims,
**characterised in that**
the bus nodes are arranged such that the energy supply or signal-electronics supply voltage can be switched on in series, in particular by the bus node switching on and/or releasing at least one of the supply voltages or signals for its following bus node.

5. Method according to at least one of the preceding claims,
**characterised in that**
one kind of action from several kinds of actions is used as the action for each bus node.

6. Method according to at least one of the preceding claims,
**characterised in that**
the same kind of action is used for each bus node
or
different kinds of actions are used for different bus nodes.

7. Method according to at least one of the preceding claims,
**characterised in that**
the accepted address is effective as an address of the bus node in the bus system.

8. Installation, comprising a bus system having bus nodes,
**characterised in that**
the bus nodes can be furnished with addresses according to a method according to at least one of the preceding claims during production or start-up of the installation.

## Revendications

1. Procédé pour affecter des adresses à des participants au bus d'un système de bus, dans lequel les participants au bus sont des entraînements,
dans lequel des participants au bus sont pourvus d'une même adresse de livraison,
dans lequel
(i) une instance d'affectation qui est réalisée sous la forme d'un ordinateur central ou d'un ordinateur de mise en service envoie une information à l'adresse de livraison via le système de bus,
(ii) l'information comprend une première adresse,
(iii) une action d'identification est exécutée sur un premier participant au bus, dont l'effet est détecté par le premier participant au bus,
(iv) le premier participant au bus adopte la première adresse,
(v) le premier participant au bus envoie une information en retour à l'instance d'affectation,
(vi) les étapes (i) à (v) sont répétées avec chaque fois une autre adresse pour chaque
fois un autre participant au bus,
un télégramme de diffusion étant utilisé à l'étape (i),
l'action étant un déplacement d'une partie mobile mécaniquement du participant au bus respectif telle qu'arbre d'entraînement, arbre de moteur, arbre intermédiaire ou rotor.

2. Procédé selon au moins une des revendications précédentes,
**caractérisé en ce que**
l'action est exécutée par une personne.

3. Procédé selon au moins une des revendications précédentes,
**caractérisé en ce que**
lors de la fabrication d'au moins une partie d'installation préassemblée, les adresses sont attribuées de manière automatisée.

4. Procédé selon au moins une des revendications précédentes,
**caractérisé en ce que**
les participants au bus sont disposés de telle manière que l'alimentation en énergie ou la tension d'alimentation de l'électronique de signalisation puisse être activée en série, en particulier par le fait que le participant au bus active et/ou libère au moins une des tensions d'alimentation ou un des signaux.

5. Procédé selon au moins une des revendications précédentes,
**caractérisé en ce que**
une sorte d'action parmi plusieurs sortes d'action est utilisée comme action pour chaque participant au bus.

6. Procédé selon au moins une des revendications précédentes,
**caractérisé en ce que**
la même sorte d'action est utilisée pour chaque participant au bus
ou
différentes sortes d'action sont utilisées pour différents participants au bus.

7. Procédé selon au moins une des revendications précédentes,
**caractérisé en ce que**
l'adresse adoptée est active comme adresse du participant au bus dans le système de bus.

8. Installation comprenant un système de bus avec des participants au bus,
**caractérisée en ce que**
lors de la fabrication ou de la mise en service de l'installation, les participants au bus peuvent être pourvus d'adresses suivant un procédé selon au moins une des revendications précédentes.
